# EUROPEAN PATENT SPECIFICATION

(11) **EP 3 208 089 B1**
(45) Date of publication and mention of the grant of the patent: **26.07.2023**
(21) Application number: 17156744.9
(22) Date of filing: 17.02.2017
(51) Int. Cl.: B41F 33/00, B42D 25/48, B42D 25/405, G01J 3/52

(54) **EMBEDDED COLOR BAR AND PRITNING METHOD**
EINGEBETTETER FARBSTREIFEN UND DRUCKVERFAHREN
BARRE DE COULEUR INTÉGRÉE ET PROCÉDÉ D'IMPRESSION

(30) Priority: 18.02.2016 US 201662297064 P
(43) Date of publication of application: 23.08.2017
(73) Proprietor: manroland Goss web systems GmbH, 86153 Augsburg (DE)
(72) Inventor: WALCZAK, Peter Walter, Lee, NH 03861 (US); BROOKS, Christopher Thomas, Rochester, NH 03867 (US); KULAK, John Joseph, West Simsbury, CT 06092 (US); ELKINSON, Brian Robert, Barrington, NH 03825 (US)

(56) References cited:
- EP-A1- 2 127 878
- EP-A1- 2 368 711
- WO-A2-2012/140384
- DE-A1-102008 056 170
- DE-A1-102009 007 864
- US-A- 5 946 414
- US-A1- 2007 266 878

## Description

The present invention relates to color bars for controlling color and registration on a printed substrate.

### BACKGROUND

EP 2 127 878 A1 discloses a method for determining print process parameters using cameras, illuminators and a test pattern.

DE 10 2009 007864 A1 discloses embedded test elements printed on a substrate adjacent to a printed image and a method for color measuring of the printed substrate, involving the step of carrying out color analysis of the printed image applied on the printed substrate, wherein areas of the

image are determined on the basis of analyzed data by computer.

EP 2 368 711 A1 discloses an invisible mark, a method and a system for color and register quality parameters measurement of a printing press.

WO 2012/140384 A2 discloses a printing test method starting from the printing onto a substrate of tests of specific graphic evaluation elements which are analyzed according to a test protocol with a predefined observation chronology and a predefined intervention chronology in order to identify the parameters that it is advisable to adjust on the printing machine irrespective of the printing method.

US 2007/266878 A1 discloses systems, methods and devices for eye marks in image processing.

DE 10 2008 056170 A1 discloses a printed print substrate assigning method for artwork, involving the steps of comparing markings with already identified markings in measuring device or computer, and assigning markings to already identified markings, where markings are inserted in data sets.

U.S. Patent No. 8,763,528, discloses a color control system for use in a printing press. The system includes a controller for reviewing digital data for a print job and identifying solid color regions of the print job that are greater than a predetermined size, a user interface allowing an operator to select solid color regions identified by the controller, a sensor for measuring a characteristic of the selected solid color regions of the print job, on a printed substrate, the controller determining measured values of the characteristic for each of the selected solid color regions, and at least one inking unit for supplying ink in a plurality of ink zones to a plate cylinder, the controller varying the ink supplied to ink zones including the solid color regions as function of a difference between the measured value of the characteristic of each selected solid color region and a predetermined target value of the characteristic.

Color bars are used to control ink on printed substrate. The color bar is printed on the substrate and thus requires a clear space on the substrate. The space required on the substrate is wasted and the color bar can impact the look of the printed substrate and/or final product if the color bar is embedded in the finished product. Typically this limits the use of color bars into finished products in packaging, for example, film or board type packaging. The color bars may be cut away or discarded from the final product, which may require an additional production step.

In order to reduce the negative impact of the color bar on the final products attempts have been made to remove the color bar entirely. Another alternative has been to control color by using the printed image on the substrate. These attempts have been met with little to no success.

Customer complaints about the web offset printing process in packaging require the printing of color bars in order to control color automatically. Many finished products, for example, labels, pouches and bags, have no location to hide the color bars. Customers find this unacceptable. As a result, the printer of the packaging has to print the packaging without the color bars and thus, without the automatic control of the color. This creates more printed waste. It is not desirable to lack online color control of the printed images.

### BRIEF SUMMARY OF THE INVENTION

The embedded color bar, according to the present invention, uses the smallest color bar available for both color and register control. Between each section of color bar, an image of the product is printed. This differs from the known art, in which the area between the color bars remains unprinted. By filling in the space between each color bar, the bar seems smaller to the end user and the image is far easier to work into the finished product design.

Claim 1 of the present invention provides an embedded color bar for both color and register control including a plurality of color bars printed on a substrate and an image printed adjacent the plurality of the color bars on the substrate, wherein each color bar is surrounded by the image and wherein the image is printed in the space between each color bar on the substrate such that the plurality of color bars blends into the image.

Claim 6 of the present invention further provides a method of printing a plurality of embedded color bars for both color and register control including the steps of printing the plurality of color bars on a substrate and printing an image adjacent the plurality of color bars, wherein each color bar is surrounded by the image and that the image is printed in the space between each color bar on the substrate such that the plurality of color bars blends into the image.

Further preferred embodiments of the invention are provided in the dependent claims.

### BRIEF DESCRIPTION OF THE DRAWINGS

A preferred embodiment of the present invention will be elucidated with reference to the drawings, in which:
Figs. 1 and 4A show color bars printed on a substrate as known in the art; and
Figs. 2, 3 and 4B show a printed substrate having an embedded color bar in accordance with the present invention.

### DETAILED DESCRIPTION OF PREFERRED EMBODIMENTS

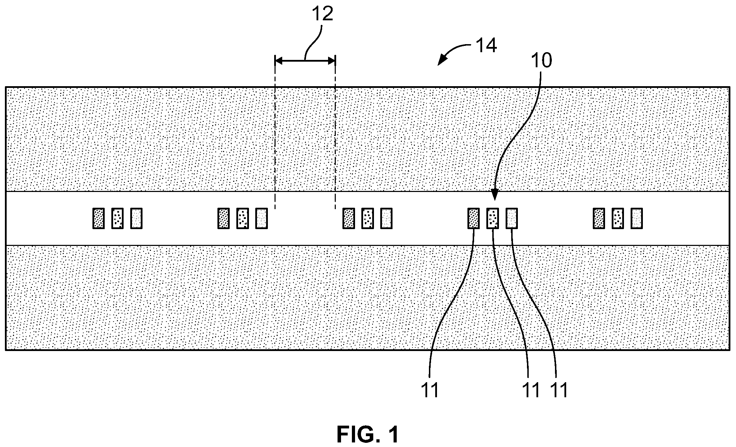

Fig. 1 shows a plurality of standard color bars 10 printed on a substrate 14 with an unprinted space 12 between each color bar 10. Each color bar may include multiple targets 11 and each target may represent a color, for example, cyan, magenta, black or yellow.

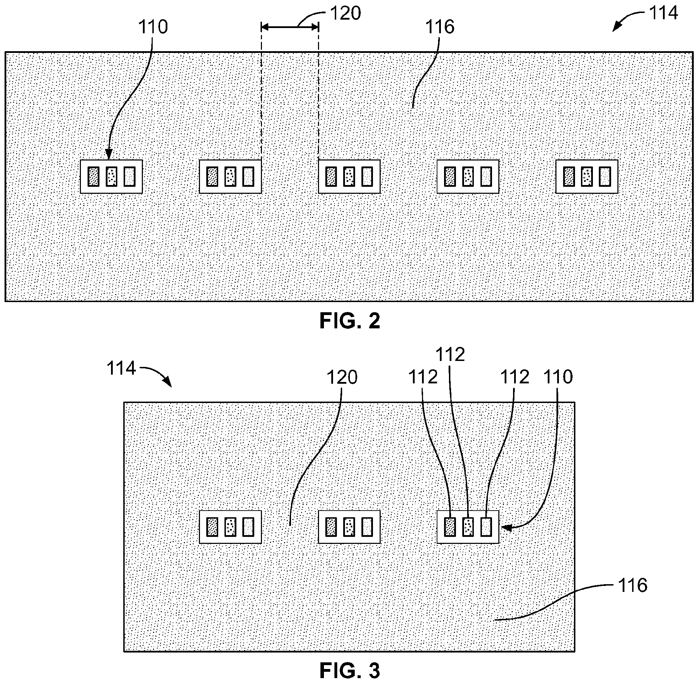

As shown in Figs. 2 to 4, a plurality of color bars 110 is printed on a substrate 114. Each color may include a plurality of targets 112, for example, three, four or seven. Each target may be a solid density block of a different color, for example, cyan, magenta, black and yellow, green, blue, orange. A printed image 116 is also printed on the substrate, the printed image is the desired image for the substrate. The image 116 is printed in space 120 between two color bars 110 and adjacent a single color bar 110. Thus, color bars 110 are embedded in printed image 116. Consequently, the portion of the substrate 114 with color bars 110 is not cut away and discarded as waste.

A height of color bar 110 may be, for example, 2.413mm (0.095"). This dimension can also be decreased to approximately 1.651mm (0.065"). A width of color bar 110 varies with the number of targets 112. For example, a color bar 110 including four targets 112 may have a width of 7.62mm (0.300") whereas a color bar 110 having seven targets 112 may have a width of 11.43mm (0.450"). A distance between the center points of two color bars 110 adjacent one another may be, for example, 40 mm for bars having seven targets 112.

Each target may be, for example, 0.635mm (0.025") by 0.889mm (0.035"). A space between each target may be as small as 0.381mm (0.015"), however 0.508mm (0.020") may be preferable in order to accommodate for fan out on wide presses. Since each color is print by a different print unit it may also be beneficial to have approximately 0.508mm (0.020") of space between targets 112 to accommodate for any variation in registration or alignment between print units. The total area of targets 112 is important in order to get an accurate reading. There can be variation in the length and width dimensions of targets 112, but it is preferable to keep the minimum dimensions to 0.508mm (0.020") to maintain integrity of the print quality. Smaller dimensions may be more difficult for a closed loop color control system to find the targets 112 if are in the printed image. So the limit on reducing the size of color bar 110 is the ability to print a good quality mark. If the mark is too small, a print defect may affect the accuracy of the measurements. Color bars 110 and targets 112 may be increased in size and the field of view closed loop color control system may be scaled accordingly.

In accordance with the present invention, small color bars 110 are used which also reduces waste. Printing an image 116 in the space 120 between color bars 110 provides for maximum image space and allows for the flexibility to provide automatic color control of the color of image 116 that was not previously possible.

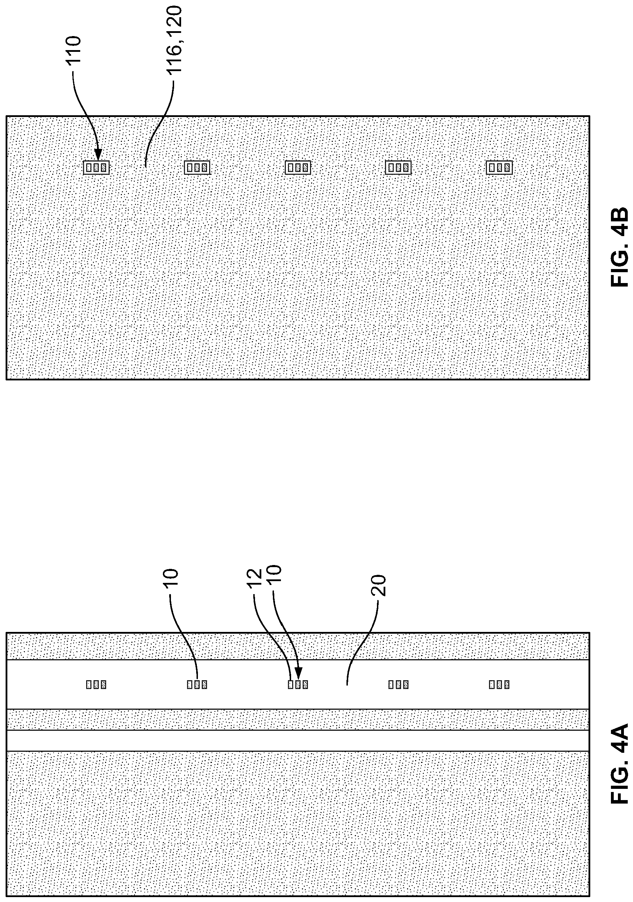

As shown in Figs. 4A and 4B, the difference between the embedded color bars 110 in accordance with the present invention and the color bars 10 as known in the art is immediately visible. The unprinted stripe 20 of Fig. 4A stands out against the printed substrate.

In contrast, the embedded color bars 110 of the present invention are designed to blend into the printed image 116 by printing the area 120 between bars 110 and adjacent a bar 110. The embedded color bars 110 are as a consequence incorporated into printed image 116. The visual advantage provided results from a small color bar 110 having small targets 112 with minimal white space therebetween and having color bar 110 surrounded by the image 116.

The color bars 110 are also used for register control and alignment.

A method of printing embedded color bars is also provided. The color bars 110 are printed on a substrate with a space 120 between each color bar 110 and a printed image 116 is printed in the space 120 between each color bar or adjacent a single color bar 110. Each target 112 in a color bar may be printed by a separate print unit.

## Claims

1. An embedded color bar for both color and register control comprising:
a plurality of color bars (110) printed on a substrate (114);
an image (116) printed adjacent the plurality of color bars (110) on the substrate (114),
**characterized in that** each color bar (110) is surrounded by the image (116) and that the image (116) is printed in the
space (120) between each color bar (110) on the substrate (114) such that the plurality of color bars (110) blends into the image (116).

2. The embedded color bar as recited in claim 1 wherein each color bar (110) of the plurality of color bars (110) includes at least one target (112).

3. The embedded color bar as recited in claim 2, wherein each color bar (110) of the plurality of color bars (110) includes at least two targets (112).

4. The embedded color bar as recited in claim 3, wherein each target (112) is a different color.

5. A printed substrate comprising:
the embedded color bar as recited in any of the claims 1 to 4 comprising a plurality of color bars (110) surrounded by the image (116) wherein the image (116) is printed in the space (120) between each color bar (110) on the substrate (114) such that the plurality of color bars (110) blends into the image (116), wherein each color bar (110) is used both for color and register control.

6. A method of printing a plurality of embedded color bars for both color and register control comprising a step of:
printing a plurality of color bars (110) (110) on a substrate (114), the method further comprising a step of:
printing an image (116) adjacent the plurality of color bars (110), **characterized in that** each color bar (110) is surrounded by the image (116) and that the image (116) is printed in the space (120) between each color bar (110) on the substrate (114) such that the plurality of color bars (110) blends into the image (116).

7. The embedded color bar according to any of the claims 1 to 4 or the printed substrate according to claim 5 or the method according to claim 6, wherein the color bar (110) has a height of approximately 1,651 mm (0,065") or 2,413 (0,095").

## Patentansprüche

1. Eingebetteter Farbstreifen für sowohl Farb- als auch Registerkontrolle, umfassend:
mehrere Farbstreifen (110), die auf ein Substrat (114) gedruckt sind;
ein Bild (116), das angrenzend an die mehreren Farbstreifen (110) auf das Substrat (114) gedruckt ist,
**dadurch gekennzeichnet, dass** jeder Farbstreifen (110) von dem Bild (116) umgeben ist und dass das Bild (116) in dem Raum (120) zwischen jedem Farbstreifen (110) auf dem Substrat (114) gedruckt ist, so dass sich die mehreren Farbstreifen (110) in das Bild (116) einfügen.

2. Eingebetteter Farbstreifen nach Anspruch 1, wobei jeder Farbstreifen (110) der mehreren Farbstreifen (110) zumindest ein Ziel (112) enthält.

3. Eingebetteter Farbstreifen nach Anspruch 2, wobei jeder Farbstreifen (110) der mehreren Farbstreifen (110) zumindest zwei Ziele (112) enthält.

4. Eingebetteter Farbstreifen nach Anspruch 3, wobei jedes Ziel (112) eine unterschiedliche Farbe hat.

5. Bedrucktes Substrat, umfassend:
den eingebetteten Farbstreifen nach einem der Ansprüche 1 bis 4, umfassend mehrere Farbstreifen (110), die von dem Bild (116) umgeben sind, wobei das Bild (116) in dem Raum (120) zwischen jedem Farbstreifen (110) auf das Substrat (114) gedruckt ist, so dass sich die mehreren Farbstreifen (110) in das Bild (116) einfügen, wobei jeder Farbstreifen (110) sowohl zur Farb- als auch Registerkontrolle verwendet wird.

6. Verfahren zum Drucken mehrerer eingebetteter Farbstreifen sowohl zur Farb- als auch Registerkontrolle, umfassend den folgenden Schritt:
Drucken mehrerer Farbstreifen (110) auf ein Substrat (114), wobei das Verfahren weiter einen folgenden Schritt umfasst:
Drucken eines Bilds (116) angrenzend an die mehreren Farbstreifen (110), **dadurch gekennzeichnet, dass** jeder Farbstreifen (110) von dem Bild (116) umgeben ist und dass das Bild (116) in dem Raum (120) zwischen jedem Farbstreifen (110) auf dem Substrat (114) gedruckt ist, so dass die mehreren Farbstreifen (110) sich in das Bild (116) einfügen.

7. Eingebetteter Farbstreifen nach einem der Ansprüche 1 bis 4 oder das bedruckte Substrat nach Anspruch 5, oder das Verfahren nach Anspruch 6, wobei der Farbstreifen (110) eine Höhe von ungefähr 1,651 mm (0,065") oder 2,413 mm (0,095") aufweist.

## Revendications

1. Barre de couleurs intégrée pour commande de couleurs et de registres comprenant :
une pluralité de barres de couleurs (110) imprimées sur un substrat (114) ;
une image (116) imprimée près de la pluralité de barres de couleurs (110) sur le substrat (114),
**caractérisée en ce que** chaque barre de couleurs (110) est entourée par l'image (116) et que l'image (116) est imprimée dans l'espace (120) entre chaque barre de couleurs (110) sur le substrat (114) de manière à ce que la pluralité de barres de couleurs (110) se fondent dans l'image (116).

2. Barre de couleurs intégrée selon la revendication 1, chaque barre de couleurs (110) de la pluralité de barres de couleurs (110) incluant au moins une cible (112).

3. Barre de couleurs intégrée selon la revendication 2, chaque barre de couleurs (110) de la pluralité de barres de couleurs (110) incluant au moins deux cibles (112).

4. Barre de couleurs intégrée selon la revendication 3, dans laquelle chaque cible (112) est une couleur différente.

5. Substrat imprimé comprenant :
la barre de couleurs intégrée selon l'une quelconque des revendications 1 à 4 comprenant une pluralité de barres de couleurs (110) entourées par l'image (116), dans laquelle l'image (116) est imprimée dans l'espace (120) entre chaque barre de couleurs (110) sur le substrat (114) de manière à ce que la pluralité de barres de couleurs (110) se fondent dans l'image (116), chaque barre de couleurs (110) étant utilisée pour la commande de couleurs et de registres.

6. Procédé d'impression d'une pluralité de barres de couleurs intégrées pour la commande de couleurs et de registres comprenant une étape :
d'impression d'une pluralité de barres de couleurs (110) sur un substrat (114), ce procédé comprenant en outre une étape :
d'impression d'une image (116) près de la pluralité de barres de couleurs (110), **caractérisé en ce que** chaque barre de couleurs (110) est entourée par l'image (116) et que l'image (116) est imprimée dans l'espace (120) entre chaque barre de couleurs (110) sur le substrat (114) de manière à ce que la pluralité de barres de couleurs (110) se fondent dans l'image (116).

7. Barre de couleurs intégrées selon l'une quelconque des revendications 1 ou 4 ou substrat imprimé selon la revendication 5 ou procédé selon la revendication 6, dans lesquels la barre de couleurs (110) a une hauteur d'environ 1,651 mm (0,065 pouces) ou 2,413 mm (0,095 pouces).
